Europäisches Patentamt

European Patent Office    (11) Publication number: **0 036 758**
**A1**
Office européen des brevets

(12) **EUROPEAN PATENT APPLICATION**

(21) Application number: 81301168.1    (51) Int. Cl.³: **B 62 D 33/06**, B 60 N 1/10

(22) Date of filing: 18.03.81

(30) Priority: 21.03.80 GB 8009667
18.09.80 GB 8030165

(43) Date of publication of application: 30.09.81
Bulletin 81/39

(84) Designated Contracting States: **DE FR IT NL SE**

(71) Applicant: **MOTOR PANELS (COVENTRY) LIMITED,
Holbrook Lane, Coventry CV6 4AW (GB)**

(72) Inventor: **Strong, Terence, 5 Grange Avenue, Finham
Coventry, (GB)**
Inventor: **Kerby, Graham Scott, 30 Finham Green Road,
Coventry (GB)**
Inventor: **Taylor, Merrick Wentworth, 72 Birches Lane,
Kenilworth Warwickshire (GB)**

(74) Representative: **Stonehouse, Sidney William et al,
Barker, Brettell & Duncan 138 Hagley Road Edgbaston,
Birmingham B16 9PW (GB)**

(54) **Sleeping arrangement for drivers' cabs.**

(57) A vehicle cab is provided with compact sleeping accommodation. Two transversely spaced aligned seats in the cab have seat portions (3) and back rests (4). The back rests carry bed portions (6) which lie horizontal, as at 6a, when the back rests are pivoted forwardly to lie on the seat portions (3). A further bed portion (9) between the seats is stowed vertically near the back of the cab and can be lowered about a hinge (12) to rest on a support (7a) so that the two bed portions (6) and the intermediate portion (9) constitute a bunk. A second bunk (14), stored behind the further bed portion (9), can be swung upwardly about the hinge (15) to a raised position (14a) at which it is supported from the roof of the cab.

ACTORUM AG

## IMPROVEMENTS RELATING TO VEHICLE CABS

This invention relates to vehicle cabs, more particularly cabs in which sleeping accommodation is provided.

The present invention consists in a vehicle cab having first and second seats spaced laterally in the cab sustantially in alignment with one another and each seat having a back rest, characterised in that the back rest of each seat carries, or is adapted to carry, on its back a bed portion and each back rest is hinged relative to a seat portion of the seat so as to be pivotable forwardly towards the seat portion into a lowered position whereby the bed portion can take up a substantially horizontal position, a further bed portion is provided which is dimensioned and shaped so as to fit between the bed portions on the back rests, support means support the further bed portion between the seats whereby the three bed portions may be arranged substantially horizontally and substantially in alignment to constitute a bunk, and means are provided for storing the further bed portion in the cab when not required for formation of the bunk.

The bed portion associated with each seat may be detachably mounted on the back rest, being removable when not required for use, but preferably the bed portion is secured to, or integral with, the back rest for ease of assembly of the bunk.

Provision may be made for retaining the back rests in the forwardly pivoted position to prevent possible rocking of the bed portions in use.

One of the seats may be in a fixed position and the support means may be arranged so as to support the further bed portion in alignment with the bed portion secured to the back rest of that seat when in the forwardly pivoted position.

The support means may be in a fixed position in the cab or may be adjustable and/or removable.

The further bed portion may be hinged along one side to a mounting in the cab at or towards the rear thereof so that it may be pivoted forwardly and downwardly from a vertical stored position for formation of the bunk bed.

The bed portions may be cushioned. A cushioned back rest bed portion may be stepped or formed so as to provide a pillow.

In an alternative arrangement the back rest of each seat and the further bed portion may each have first and second elements secured to it arranged so that they are vertically spaced when the back rest is erect. These elements constitute panel support members. On each seat a panel of material is connected between the first and second elements of the back rest and a further panel of material is connected between the first and second elements of the further bed portion. The material of the panel may be connected under tension to the first and second elements.

Means may be provided releasably to connect a side edge of the panel of at least one seat to the adjacent side edge of the further panel. Preferably means are provided releasably to connect the side edges of the further panel to the respective adjacent side edges of the panel of each seat.

The back rest of either or both seats may have a third element which provides an anchorage to which the side edge of the panel remote from the further mattress portion may be connected.

The term "material" as used herein is intended to include a sheet or net of material or webbing. The properties required of the material are that it will support the human body without excessive sag. The material will preferably allow "breathing" so as to avoid undue perspiration of the user. The material, when in sheet form, may have perforations. Non-limiting examples of suitable materials include canvas, woven man made fibres and formed moulded or extruded plastics materials.

It will be seen that in the construction in which the mattress or base of the bed is formed by the panels of material instead of by cushioned members, an uncushioned yet pliant support is provided for the user. The user of the bed will normally have some form of bedding which may conveniently be a sleeping bag. The latter may be additionally filled or padded at its under surface to compensate for the lack of cushioning on the panels. The material panels may form a support on to which a mattress is placed rather than being used as a mattress itself.

The cab may be provided with a second bunk stowed in a vertical, or substantially vertical, position extending across the back of the cab behind the further bed portion and arranged so that, with the further bed portion in the horizontal position, the second bunk may be erected, preferably above and spaced vertically from the first bunk.

4

Embodiments of the invention will now be described by way of example with reference to the accompanying drawings in which:

Figure 1 is a side view in elevation showing a vehicle seat and a further bed portion,

Figure 2 is a front elevation showing two seats and the further bed portion,

Figure 3 is a plan view from above,

Figures 4, 5 and 6 are similar to Figures 1, 2 and 3 respectively but show a two bunk arrangement,

Figure 7 is a perspective view of an alternative vehicle seat with the back rest in the normal, erected, postion,

Figure 8 is a perspective view of the seat of Figure 7 with the back rest in the forwardly pivoted, lowered position and including an alternative further bed portion, also in the lowered position,

Figure 9 is a section through a tube of the seat of Figure 7,

Figures 10 and 11 are side and plan views on an enlarged scale of a fastener for securing material to a seat, and

Figure 12 is an enlarged section on line 12-12 of Figure 7.

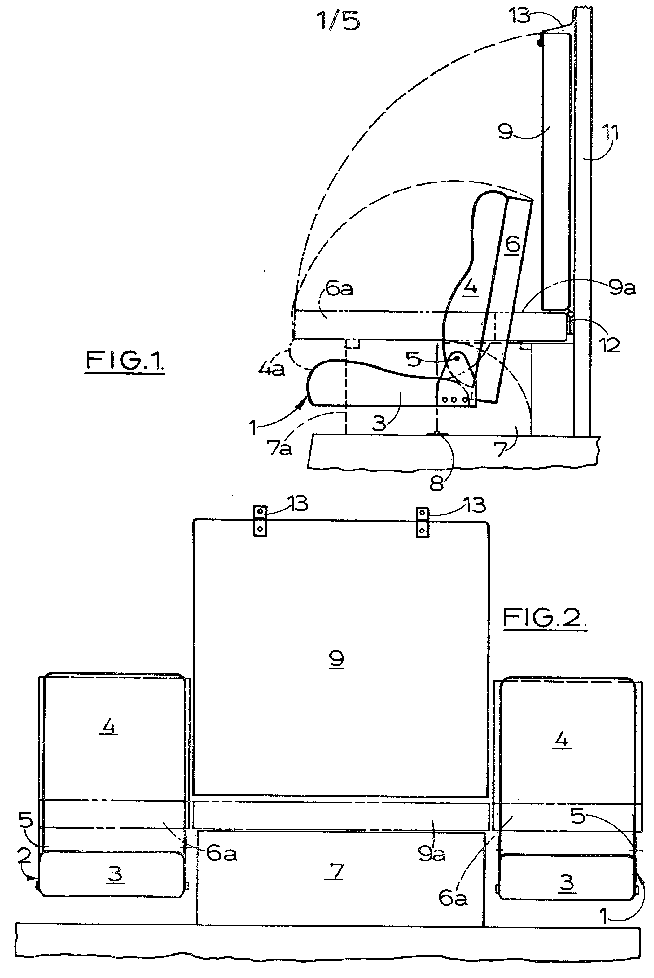

Referring to Figures 1, 2 and 3 there is provided inside a vehicle cab at one side a driver's seat 1 which, in known manner (not shown), may be raised and lowered about a mean position and which may be adjusted forwards or backwards from a mean position to suit the driver. The range of vertical movement is generally of the order of 5 cm. up and down from the mean position. A passenger seat 2 is provided on a seat box (not shown) at the other side of the cab and the position of this is fixed. Each seat has a seat portion 3 and a back rest 4 which is hinged at 5 to the seat portion. A bed portion 6 is secured to the back of each back rest 4. When the back rest is pivoted forwardly and downwardly to the position shown at 4a in Figure 1 the bed portion takes up the position shown at 6a and is locked in that position, for example by means of a conventional spring loaded pawl and notch mechanism between the back rest and hinge structure or by a restraining strap, to prevent rocking of the bed portion when in use.

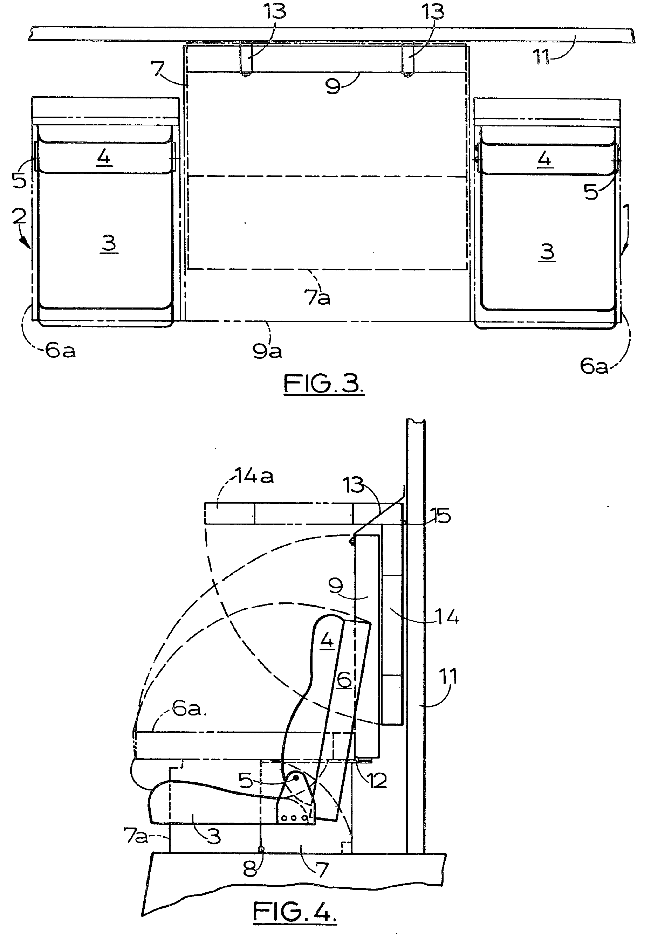

A support, which may conveniently be a locker 7, is hinged to the floor of the cab at 8 and may be rotated about the hinge to a forward position shown in broken lines at 7a in Figures 1 and 3.

A further bed portion 9 of generally rectangular shape is hinged to the cab rear panel 11 at 12 and is retained in a vertical stored position by straps 13 releasably secured between the panel 11 and bed portion 9.

With the locker 7 in the forward position 7a, the straps 13 are released and bed portion 9 is pivoted forwardly and downwardly to the position shown at 9a in which its upper surface is aligned with the upper surfaces of bed portions 6 in their positions 6a, the driver's seat 1 being assumed to be in alignment with the passenger seat, for example at the mean position of adjustment of the driver's seat. Thus the three bed portions 6 and 9 together form a bunk.

It will be appreciated that since the bed portion 9 is in a central position when stowed at the back of the cab it will not obscure vision out of rear side windows of the cab nor will it obscure vision through side windows, if provided, in the cab rear panel, that is, behind the seats. The construction which has been described also results in some weight saving because the structure of the seats is used to provide bed support at each end of the bunk.

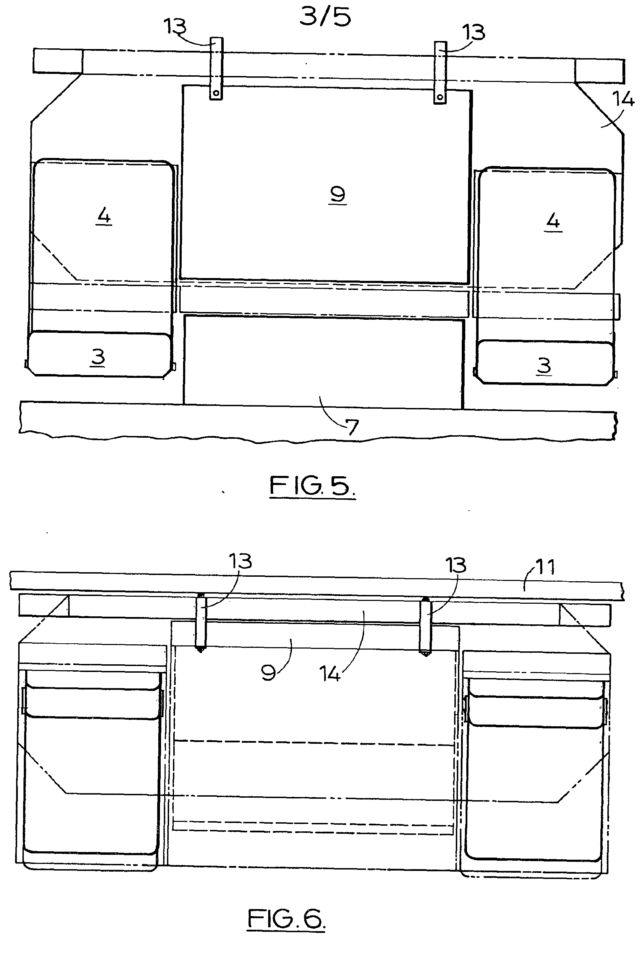

Referring now to Figures 4, 5 and 6, the seats with back rests and the further bed portion 9 are similar to those in the construction of Figures 1, 2 and 3. The bed portion 9 in the arrangement shown in Figures 4, 5 and 6, however, is located forward of its position in Figures 1, 2 and 3 enabling a second bunk 14 to be stowed behind it.

The bunk 14 extends across the back of the cab and is hinged at 15 to the cab rear panel 11.

When the lower bunk has been set in position, as described with reference to Figures 1, 2 and 3, the upper bunk 14 may be pivoted forwardly and upwardly about hinge 15 to the position shown at 14a. The upper bunk may be retained in the raised position by straps depending from the cab structure or by any other suitable means.

The support means for the lower, or single, bunk may comprise a fixed member such as a tubular metal support provided that this can be arranged so as not to interfere with the normal operation of the vehicle.

The bed portions on the back rests of the seats may be integral with the back rests or may be separate components secured to the back rests. The bed portions and the further bed portion 9 may be cushioned and one of the bed portions may be stepped or formed so as to provide a pillow.

As illustrated, the driver's seat 1 is for a left hand drive vehicle but the driver's seat, which is an adjustable seat, may, of course, be provided on the right hand side and the fixed seat 2 on the left hand side if desired.

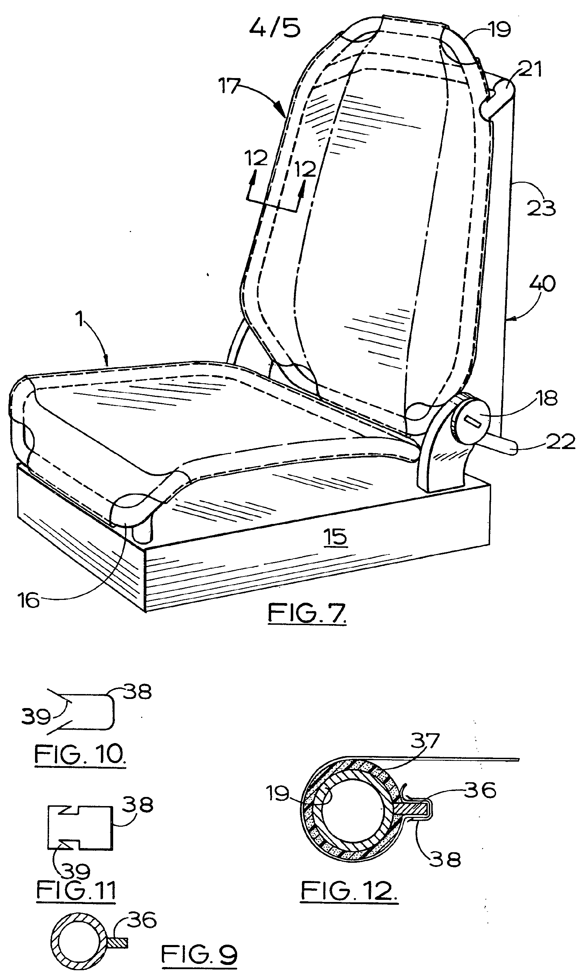

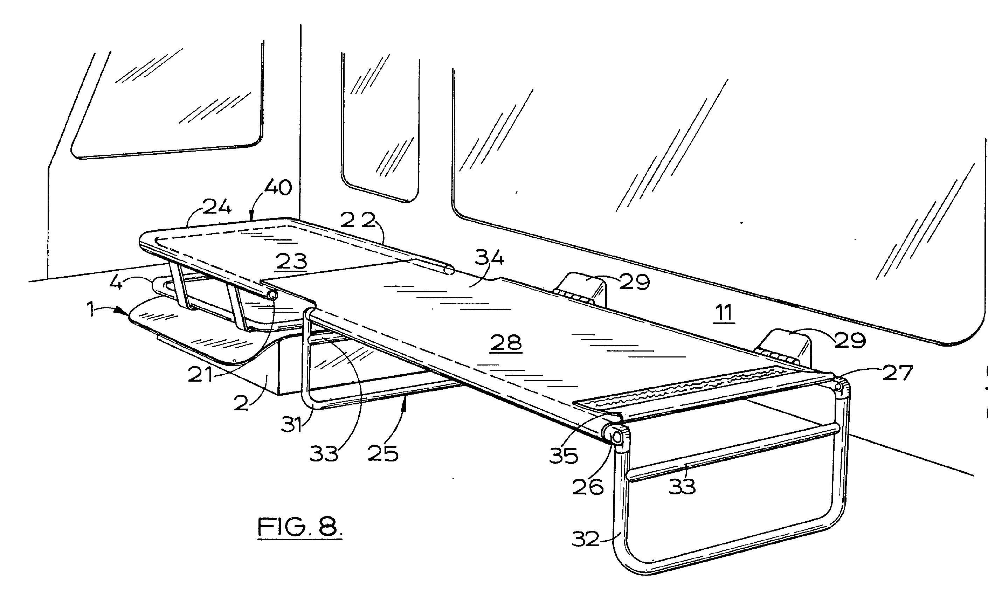

Referring now to Figures 7 to 11, the seat 1, Figure 7, is shown mounted on a base 15 which may represent a fixed mounting for the seat or, as is usual for the driver's seat, a mechanism for forward and aft and vertical adjustment of the seat.

The seat has a tubular frame 16 to which an upholstery material is secured. The seat has a back rest 17 which is pivoted at 18 to the seat frame. The back rest, in known manner, may be adjusted to and locked in different angular positions relative to the seat frame, if desired.

The back rest 17 has a tubular frame 19 to which an upholstery material is secured. Upper and lower tubular elements 21, 22 are secured, as by welding, to the frame 19. A panel 23 of material, which may be the same as the upholstery material, is secured between the elements 21, 22. The back rest 17 may be folded forwards so that the panel 23 lies substantially horizontally and, in conjunction with the back rest and seat forms one bed portion 40 of a bunk which is comprised of two similar bed portions and a central further bed portion (25).

Referring now to Figure 8, the seat 1 is shown with the back rest in the lowered position forming one end portion of a bunk. In this case the upper and lower elements 21, 22 are formed in one piece with an additional element 24 which joins them so that the three elements form a generally U-shaped member secured to the back rest 17. The material of the panel 23 is secured along one side edge to the additional element 24 as well as being secured between the upper and lower elements 21, 22.

The further bed portion 25 is shown in the lowered position in Figure 8. It has upper and lower elongate elements 26, 27 across which a panel 28 of material is secured. The lower element 27 is hingedly secured at 29 to the rear wall 11 of the cab. U-shaped support members 31, 32, having bracing struts 33, are pivotally secured to each end of the elements 26, 27. Stops, not shown, are provided to limit outward movement of the support members 31, 32. It will be seen that the support members 31, 32 and the hinges 29 are so dimensioned and located that when the further bed portion is folded down the upper and lower elements 26, 27 of the further bed portion lie in the same horizontal plane as, and are aligned with, the upper and lower elements 21, 22 on the folded back rest 17.

The panel 28 includes a flap 34, 35 at each end. The free edges of flap 34 and of panel 23 are fitted with releasable inter-acting adhesive fastening strips, for example "Velcro" (Registered Trade Mark) strip, so that panels 23 and 28 can be releasably connected to form a continuous panel. As an alternative a zip fastener could be used. A second seat in the cab is located adjacent the support member 32 and is of similar construction to that of seat 1. The flap 35 may be similarly secured to the free edge of the panel 23 of the second seat so that a continuous bunk is formed by the seats and further bed portion.

When the bunk is not required the flaps 34, 35 are released and folded back, as shown in the case of flap 35. The further bed portion 25 is hinged up into a position adjacent the wall 11 of the cab and secured by suitable means, not shown. The support members 31, 32 are then folded against the upper and lower elements 26, 27 to complete stowing of the further bed portion. It will be appreciated that the further bed portion 25 may be moved into the lowered and supported position to provide an additional seat in the cab if desired, as may the further bed portion 9 of Figures 1 to 6.

Referring now to Figures 9 to 12, the tubes forming the frames of the seats, back rests and upper, lower and additional elements to which material is required to be attached may be provided with strips 36, secured as by welding. Padding 37, for example plastic foam padding, may be fitted around the tube except in the way of the strip 36. The edge of the material is placed over the strips and spring fasteners 38 are applied at intervals along the length of the strip 36. These fasteners have tangs 39 which grip the material. The material is brought round the padded tube, tensioned, and secured in like manner to the corresponding tube on the opposite side of the seat frame, back rest or elements of the bunk. Where a panel, for example the panel 23 or panel 28, has a free edge or edges it may be found that tensioning of the material between the upper and lower elements, 21, 22 and 26, 27, causes the free edge or edges to be drawn in. Where this is likely to occur the or each free edge is cut initially in a curve or arc of

10

a circle (along which the fastening strip is secured) and this becomes a straight line edge when the panel is fitted and tensioned and engagement of the mating Velcro fastening strips is thereby facilitated.

CLAIMS

1. A vehicle cab having first and second seats spaced laterally in the cab sustantially in alignment with one another and each seat having a back rest, characterised in that the back rest (4, 17) of each seat (1, 2) carries, or is adapted to carry, on its back a bed portion (6, 40) and each back rest (4, 17) is hinged relative to a seat portion (3) of the seat (1, 2) so as to be pivotable forwardly towards the seat portion (3) into a lowered position whereby the bed portion (6, 23) can take up a substantially horizontal position, a further bed portion (9, 25) is provided which is dimensioned and shaped so as to fit between the bed portions (6, 40) on the back rests (4, 17), support means (31, 32) support the further bed portion (6, 40) between the seats (1, 2) whereby the three bed portions (6, 40, 9, 25) may be arranged substantially horizontally and substantially in alignment to constitute a bunk, and means (13) are provided for storing the further bed portion (6, 40) in the cab when not required for formation of the bunk.

2. A vehicle cab as claimed in Claim 1 characterised in that the bed portion (6) associated with each seat (1, 2) is integral with the back rest (4) and is cushioned.

3. A vehicle cab as claimed in Claim 1 characterised in that the bed portion (40) associated with each seat (1, 2) comprises first and second elements (21, 22) fixed to the back rest (17) at positions such that they are vertically spaced when the back rest (17) is erect, and a panel (23) of upholstery material having opposed sides connected between the elements (21, 22).

4. A vehicle cab as claimed in Claim 3 characterised in that a third element (24) is secured to the back rest (17) of at least one seat (1, 2) on that side of the seat adjacent the side of the cab and a corresponding end of the panel (23) of material is secured to said third element (24).

5. A vehicle cab as claimed in Claim 1 or Claim 2 characterised in that the further bed portion (9) comprises a generally rectangular cushioned member having one side pivotally secured to a mounting in the cab.

6. A vehicle cab as claimed in any of Claims 1, 3 or 4 characterised in that the further bed portion (25) comprises two elongate elements (26, 27) which are disposed in parallel spaced apart relationship extending transversely of the cab and one of which is pivoted to a fixed mounting (11) in the cab, and a panel (28) of material having opposed sides secured to the elongate elements (26, 27).

7. A vehicle cab as claimed in Claim 6 characterised in that the elongate elements (26, 27) are secured in spaced apart relatonship by support means comprising a support member (31, 32) at or towards each end, which support member (31, 32) is hingedly connected between the elongate elements (26, 27).

8. A vehicle cab as claimed in Claim 6 or Claim 7 as dependent from Claim 3 or Claim 4 characterised in that means (34, 35) is provided releasably to connect adjacent ends of the panels (23, 28) on the bed portion (40) of a back rest (17) and the further bed portion (25).

0036758

9. A vehicle cab as claimed in any of Claims 3, 4, 6 to 8 characterised in that at least one of the panels (23, 28) of material in the free state before being secured to the bed portion (40), or further bed portion (25) as the case may be, has an arcuately shaped end whereby when said panel (23, 28) is secured under tension between the first and second elements (21, 22), or between the elongate elements (26, 27) as the case may be, said end becomes straight to facilitate its connection to the end of an adjacent panel (23, 28).

10. A vehicle cab as claimed in any preceding claim characterised in that a second bunk (14) is stored in a, or substantially a, vertical position extending across the back of the cab behind the further bed portion (9) and arranged so that, with the further bed portion (9) in the horizontal position, the second bunk (14) may be erected above and spaced vertically from the bunk comprised of the three bed portions (6, 9).

11. A vehicle cab as claimed in any preceding claim characterised in that means are provided to secure the back rests (14, 17) in the lowered positions and so inhibit rocking of the bed portions (6, 40) carried thereby.

1/5

0036758

FIG.1.

FIG.2.

FIG.3.

FIG.4.

0036758

FIG. 5.

FIG. 6.

0036758

4/5

FIG. 7.

FIG. 10.

FIG. 11.

FIG. 12.

FIG. 9

FIG. 8.

5/5

0036758

European Patent Office

**EUROPEAN SEARCH REPORT**

0036758
Application number

EP 81 30 1168.1

| Category | Citation of document with indication, where appropriate, of relevant passages | Relevant to claim |
|---|---|---|
| | GB - A - 2 011 252 (COMPIN) <br> * fig. 1, 2 * <br> -- | 1,10 |
| | GB - A - 1 310 056 (HOLDSWORTH CONVERSIONS) <br> * fig. * <br> -- | 1 |
| | CH - A5 - 590 142 (COMPIN) <br> * fig. * <br> -- | 2,11 |
| A | US - A - 4 005 898 (WAY) <br> -- | |
| A | US - A - 2 806 510 (WALKER) <br> ---- | |

**DOCUMENTS CONSIDERED TO BE RELEVANT**

**CLASSIFICATION OF THE APPLICATION (Int. Cl.³)**

B 62 D 33/06
B 60 N 1/10

**TECHNICAL FIELDS SEARCHED (Int. Cl.³)**

B 60 N 1/10
B 62 D 33/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 02-06-1981 | LUDWIG |

EPO Form 1503.1 06.78